# EUROPÄISCHE PATENTANMELDUNG

(11) **EP 2 011 820 A1**
(43) Veröffentlichungstag der Anmeldung: **07.01.2009**
(21) Anmeldenummer: 07111627.1
(22) Anmeldetag: 03.07.2007
(51) Int. Cl.: C08K 5/19

(54) **Antigelierungsmittel für wässrige Lösungen von Polyvinylalkoholen oder Ethylen-Vinylalkohol-Copolymeren**

(71) Anmelder: Kuraray Europe GmbH, 65926 Frankfurt am Main (DE)
(72) Erfinder: Hentzschel, Peter, 61440, Oberursel (DE)
(74) Vertreter: Kisters, Michael Marcus

(57) **Zusammenfassung**

Die Erfindung betrifft wässrige Lösungen enthaltend mindestens 20 Gew.% Polyvinylalkohol oder Ethylen/Vinylacetat/Vinylalkohol-Copolymere und 1 bis 50 Gew. % einer oder mehrerer quartärer Ammoniumverbindungen der Formel I oder II 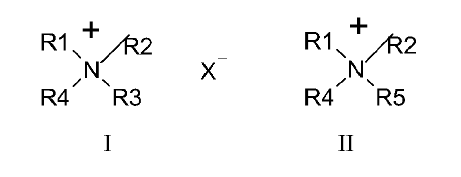 Mit
R¹, R², R³, R⁴ = jeweils gleich oder unterschiedlich aliphatischer, aromatischer, substituierter oder unsubstituierter Kohlenwasserstoffrest mit 1 bis 16 Kohlenstoffatomen oder (CH₂CH₂O)ₙH und/oder (CHCH₃CH₂O)ₙH -Einheiten mit n=1 bis 10 oder olefinische Kohlenwasserstoffe mit 1 bis 16 Kohlenstoffatomen.
R⁵: O⁻, (CH₂)ₘCO₂⁻ mit m = 1-16
X = F⁻, Cl⁻, Br⁻, Formiat, Acetat

## Beschreibung

Die Erfindung betrifft die Stabilisierung wässriger Lösungen von Polyvinylalkoholen und/oder Vinylalkohol-/EthylenCopolymeren gegen Gelierung.

### Stand der Technik

Polyvinylalkohol (PVA) ist formal ein Copolymer mit Vinylalkohol- und Vinylacetat-Einheiten und wird insbesondere durch sein Molekulargewicht und seinen Hydrolysegrad charakterisiert. Das Molekulargewicht von PVA wird üblicherweise über die Viskosität seiner wässrigen Lösungen erfasst. Diese reicht bei marktüblichen Produkten von 3-170 mPa.s, gemessen an einer 4 %igen Lösung bei 20°C. Der Hydrolysegrad von PVA beschreibt den molaren Anteil an Hydroxylgruppen in Mol%, welcher bei der Verseifung des PVA-Vorproduktes, Polyvinylacetat, entsteht. Der Hydrolysegrad von klar wasserlöslichen PVA reicht von ca. 80 bis 99,9 Mol%. Typische Produkte am Markt sind unter dem Namen "Mowiol®" und "Kuraray Poval®" bekannt.

Ethylen-Vinylalkohol-Copolymer (EVA) ist formal ein Copolymer aus Ethylen, Vinylalkohol und Vinylacetat und kann, analog zu PVA, durch Molekulargewicht und Hydrolysegrad unterschieden werden. Die Herstellung erfolgt durch Verseifung von EthylenVinylacetat-Copolymeren. Bedingt durch seinen Ethylen-Anteil gibt es sowohl wasserunlösliches als auch wasserlösliches Ethylen/Vinylalkohol/Vinylacetat-Copolymer. Die nachfolgenden Ausführungen beziehen sich nur auf wasserlösliche Copolymere, also auf solche mit einem niedrigen Ethylen-Anteil (L-EVA) bis maximal 15 Mol%. Typische Produkte am Markt treten unter dem Namen "Exceval®" auf.

Die Viskosität reicht bei den marktgängigen L-EVA Typen von 4-30 mPa.s, der Hydrolysegrad beträgt meist ca. 92-99,4 Mol%.

Mittel- bis vollverseifte PVA- und L-EVA-Typen werden in der Regel in Wasser gelöst, indem sie zunächst in kaltem Wasser suspendiert und sodann bei mindestens 95°C über eine Zeit von 30-60 Minuten unter Rühren in Lösung gebracht werden. Nach dem Erkalten sind die Lösungen normalerweise gebrauchsfertig. Die bei einer bestimmten Temperatur und einem bestimmtem Feststoffgehalt gemessenen Viskositäten solcher frisch hergestellten Lösungen entsprechen den Literaturdaten, die über diese Produkte vorliegen.

Wässrige Lösungen von mittel- bis vollverseiften PVA- und L-EVA-Produkten haben den Nachteil, über die Zeit gerechnet eine immer höhere Viskosität zu entwickeln, welche schließlich in eine Gelierung münden kann. Dieser Viskositätsanstieg ist abhängig von ihrem Molekulargewicht, von der Temperatur der Lösung, von dem Feststoffgehalt der Lösung, von der Bewegung (z.B. Rühren) und von der Standzeit. Bei teil- und niedrigverseiften PVA- und L-EVA-Typen wurde ein derartiges Verhalten bisher nicht beobachtet.

Ein niedriges Molekulargewicht der Polymeren begünstigt den Viskositätsanstieg, ebenso eine niedrige Lösungstemperatur. Ein hoher Feststoffgehalt der Lösung kann ebenfalls ein Anwachsen der Viskosität bewirken. Wird die Lösung nicht gerührt oder anderweitig bewegt, so trägt auch das zur Viskositätszunahme bei. Entgegengesetzte Eigenschaften und Parameter zu den beschriebenen (also hohes Molekulargewicht, hohe Lösungstemperatur, niedriger Feststoffgehalt, gut gerührt) führen zu einer Vermeidung des Viskositätsanstieges.

Ist ein solcher Viskositätsanstieg bzw. ein Gelzustand eingetreten, lässt sich der ursprüngliche, dünnflüssige Zustand nur durch erneutes Erhitzen unter Rühren bis an den Kochpunkt wieder herstellen.

Häufig ist es nicht vermeidbar, die wässrige Lösung eines PVA-oder L-EVA-Produktes bei hohem Feststoffgehalt, relativ niedriger Temperatur und ohne Bewegung für eine gewisse Zeit zu lagern. Die Molekularität ergibt sich in der Regel aus der Art der Applikation heraus, so kann ein hoher Feststoffgehalt z.B. für High-Solids Anwendungen oder aber auch einfach, um Trocknungsenergie zu sparen, notwendig sein.

Vollverseifte, vor allem niedrigmolekulare, wässrige PVAsowie L-EVA-Lösungen neigen im Standtest zur Viskositätserhöhung und nicht selten zur Gelierung. Zur Erhöung der Standzeiten von wässrigen PVA-und L-EVA-Lösungen wäre es wünschenswert, die Viskositätserhöhung möglichst lange zu unterdrücken.

### Aufgabe

Aufgabe der vorliegenden Erfindung war es daher die Gelierung wässriger PVA- oder L-EVA-Lösungen über einen möglichst langen Zeitraum zu verhindern und so die Lagerstabilität solcher Lösungen zu erhöhen.

Überraschenderweise wurde gefunden, dass die Lagerstabilität von wässrigen PVA- und/oder L-EVA-Lösungen durch Zugabe von organischen quartären Ammoniumverbindungen, sog. Quats erheblich verbessert werden kann.

Die Wirkung des Quats lässt sich in dieser Anwendung möglicherweise mit "debonding" (Bindungssperre) erklären, d.h. es zieht die freien Elektronen, die bei den Wasserstoffbrückenbindungen aktiv sind, auf sich und verhindert so die weitere Aggregation der Polyhydroxyl-Gruppen von PVA bzw. L-EVA.

Die Verwendung von Quats in niedrig konzentrierten PVA-Lösungen ist bekannt.

So werden Quats im Bereich der kosmetischen Produkte als kationische Hilfsmittel mit einem pflegerischen Effekt eingesetzt. Solche Systeme enthalten häufig PVA als Schutzkolloid oder Verdickungsmittel in geringen Mengen. So beschreiben z.B. DE 10126252, DE 10126253 und DE 10129225 quaternäre Stickstoffverbindungen, kombiniert mit verzweigten und unverzweigten langkettigen Alkoholen mit maximal 36 Kohlenstoffatomen für die Haarpflege sowie für kosmetische Anwendungen. PVA findet in allen Fällen nur als Verdicker Verwendung. Konzentrierte wässrige PVA-Lösungen bzw. deren Stabilisierung gegen Gelbildung durch Zugabe von Quats sind hier nicht beschrieben.

PVA-Lösungen werden häufig in der Papierindustrie eingesetzt. DE 4322178 beschreibt den Einsatz von PVA und quaternären Stickstoffverbindungen, um beim Inkjet-Drucken eine bessere Nassfestigkeit des Drucks zu erzeugen. Die Quats dienen als farbfixierender Zusatz in der Tintenaufnahmeschicht d.h. einer festen Schicht auf einem Trägermaterial wie Papier. Die Menge der eingesetzten kationischen Hilfsmittel ist zum einen zu gering, um einen stabilisierenden Effekt auf eine mögliche Gelbildung des PVA aus zu üben, zum anderen sind die Konzentrationen des PVA in den beschriebenen PVA-Lösungen zu klein, um einen Geleffekt auszulösen. Daher findet die Handhabung von konzentrierten PVA-Lösungen und die stabilisierende Wirkung der erwähnten kationischen Hilfsmittel hier keine Erwähnung.

Auch bei Polymerisationsreaktionen ist die gleichzeitige Verwendung von Quats und PVA bekannt. So offenbart DE 10200504285 die Verringerung des Restmonomer-Gehaltes bei der Copolymerisation von Acrylsäure und Acrylamid und deren Derivate in Gegenwart von Quats. PVA findet hier lediglich als Nachvernetzungsmittel in geringen Mengen Einsatz und wird im Zuge der Reaktion in das Copolymere eingebaut. Eine Stabilisierung von konzentrierten PVA-Lösungen gegen Gelbildung wird hier nicht beschrieben.

DE 860549 beschreibt die Verbesserung der Wasserfestigkeit von Formkörpern aus PVA durch Zugabe von Quats, d.h. das Gegenteil der erfindungsgemäßen Stabilisierung von wässrigen Lösungen von PVA.

Gegenstand der vorliegenden Erfindung sind daher wässrige Lösungen enthaltend mindestens 14 Gew.% Polyvinylalkohol und/oder Ethylen/Vinylacetat/Vinylalkohol-Copolymer und 1 bis 50 Gew. % einer oder mehrerer quartärer Ammoniumverbindungen der Formeln I oder II 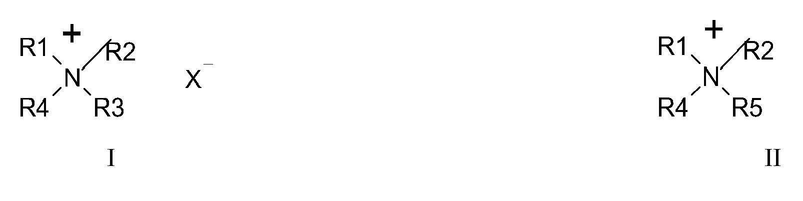 Mit R¹, R², R³, R⁴ = jeweils gleich oder unterschiedlich aliphatischer, aromatischer, substituierter oder unsubstituierter Kohlenwasserstoffrest mit 1 bis 16 Kohlenstoffatomen oder (CH₂CH₂O)ₙH und/oder (CHCH₃CH₂O)ₙH - Einheiten mit n=1 bis 10 oder olefinische Kohlenwasserstoffe mit 1 bis 16 Kohlenstoffatomen. R⁵: O⁻, (CH₂)ₘCO₂⁻ mit m = 1 bis 16 X = F⁻, Cl⁻, Br⁻, Formiat, Acetat

Ein weiterer Gegenstand der Erfindung ist die Verwendung einer oder mehrerer quartärer Ammoniumverbindungen der Formeln I oder II zur Reduzierung der Gelbildung wässriger Lösungen enthaltend mindestens 14 Gew.% Polyvinylalkohol und/oder Ethylen/Vinylacetat/Vinylalkohol-Copolymer, wobei die wässrigen Lösungen 1 bis 50 Gew. % einer oder mehrerer quartärer Ammoniumverbindungen der Formeln I oder II enthalten.

Die erfindungsgemäßen wässrigen Lösungen können zwar einen für wässrige Lösungen von Polyvinylalkoholen oder L-EVA üblichen Viskositätsanstieg mit der Zeit auf weisen, jedoch ist dieser deutlich schwächer ausgeprägt, so dass die erfindungsgemäßen Lösungen eine hervorragende Lagerstabilität aufweisen. Im Idealfall wird die Gelierung über einen längeren Zeitraum gänzlich vermieden.

Unter Gelierung wird im Rahmen der vorliegenden Erfindung ein wässriges System mit einer Viskosität von mehr als 3500 mPas verstanden. Bevorzugt weisen daher erfindungsgemäße Lösungen eine Viskosität nach 30 Tagen von weniger als 3000 mPas, insbesondere 2500 mPas und besonders bevorzugt von weniger als 2000 mPas auf.

Erfindungsgemäße Lösungen sind bevorzugt mindestens 30 Tage, besonders bevorzugt mindestens 45 Tage, insbesondere mindestens 60 Tage ohne Gelierung bei Raumtemperatur lagerfähig.

Wie bereits beschrieben steigt die Gelierneigung von wässrigen Lösungen von Polyvinylalkoholen und L-EVA mit dessen Gewichtsanteil und Hydrolysegrad. Bevorzugt weisen die erfindungsgemäß eingesetzten Polyvinylalkohole und L-EVA einen Hydrolysegrad von über 90 Mol%, bevorzugt über 95 Mol% und insbesondere über 98 Mol% auf.

Die erfindungsgemäßen Lösungen können mindestens 14 Gew.% Polyvinylalkohol und/oder L-EVA (bezogen auf die Gesamtlösung) enthalten. Aufgrund der guten Stabilisierwirkung der erfindungsgemäß verwendeten quartären Ammoniumverbindungen, können die erfindungsgemäßen Lösungen auch höher konzentriert, wie mindestens 18 Gew.%, mindestens 22 Gew.% oder mindestens 25 Gew.% Polyvinylalkohol und/oder L-EVA enthalten. Für den Fall, das die Lösungen Polyvinylalkohol und L-EVA enthalten, bezieht sich der Mindestanteil auf die Summe dieser Verbindungen.

Zur weiteren Verbesserung der Lagerstabilität von erfindungsgemäßen Lösungen können diese zusätzlich Harnstoff oder dessen organische Derivate enthalten. Hier haben sich 1 bis 20 Gew.% Harnstoff oder dessen Derivate als praktikabel erwiesen. Alternativ oder zusätzlich zur Harnstoffzugabe können die erfindungsgemäßen Lösungen 1 bis 20 Gew.% eines oder mehrerer Alkohole aus der Gruppe Methanol, Ethanol, n-Propanol, Isopropanol oder Butanol (alle Isomere) enthalten. Als quaternäre Ammoniumverbindung sind alle unter dem Oberbegriff "Quat" gängigen Verbindungen einsetzbar, wie z.B. Alkyldimethylbenzylammoniumchlorid oder MAPTAC (3-Trimethylammoniummethacrylamidchlorid).

Besonders geeignet ist die Verwendung von 5 bis 25 Gew.%, bevorzugt 15 bis 25 Gew.% Alkylbenzylammoniumsalze, insbesondere Alkyldimethylbenzylammoniumchlorid. Als Alkylgruppen kommen C₁ bis C₁₆-Alkyle (auch Mischungen hiervon), als Anionen Cl⁻, Br⁻ oder SO₄³⁻ in Frage.

Alkyldimethylbenzylammoniumchloride sind z.B. unter dem Namen Barquat DM-80 im Handel. Barquat DM-80 ist ein Alkyldimethylbenzylammoniumchlorid mit Alkyl = C12 (70 Mol%) - C14 (30 Mol%) ist.

Die Kombination von 2 bis 10 Gew.% Alkyldimethylbenzylammoniumchlorid mit 5 bis 20 Gew.% Harnstoff führt zu besonders lagerstabilen Lösungen.

### Beispiele

Alle Viskositätsmessungen wurden mit einem Brookfield-Viskosimeter, Typ RVT, bei 23°C durchgeführt. Die Spindeln wurden entsprechend den unterschiedlichen Viskositäten ausgewählt. Im Folgenden werden die Viskositäten nach Stunden bzw. Tagen Standzeit angegeben. Dazu wurde die betreffende, korrekt temperierte Lösung für 8 min bei mittlerer Scherrate mit einem Flügelrührer aufgerührt. Danach wurde sofort die Viskosität gemessen.

Alle folgenden Angaben für Feststoffgehalte beziehen sich auf Gew.% bezogen auf die wässrige Lösung. Die Angaben zu den Anteilen des Quats in der Lösung beziehen sich auf Gew.% bezogen auf das Trockengewicht des PVA oder L-EVA.

### Vergleichsbeispiel 1

Es wurde eine Stammlösung von Mowiol 4-98 mit 24,3 % Feststoffgehalt angesetzt. Zu dieser wurden jeweils 0 %, 2 %, 5 %, 10 % sowie 15 % an Licowax KST, fest auf fest, hinzugefügt.

Licowax KST ist ein hartes Esterwachs von der Fa. Clariant, das als Feststoff vorliegt und wasserlöslich ist. Licowax KST hat einen Tropfpunkt von 60°C, eine Säurezahl von <5 mg KOH/g und eine Verseifungszahl von <15 mg KOH/g.

Ergebnis: Alle Lösungen gelierten innerhalb von 2 Tagen.

### Beispiel 2

Es wurde eine Stammlösung von Mowiol 4-98 mit 24,0 % Feststoffgehalt angesetzt. Zu dieser wurden jeweils 0 %, 2 %, 5 %, 10 % sowie 15 % folgender Produkte, fest auf fest, hinzugefügt:

| Zusatz | Produkt | Beschreibung | Ergebnisse |
|---|---|---|---|
| | | | |
| 1 | Genamin C 050 | Cocosfettaminoxethylat | Tabelle 1 |
| 2 | Genamin C 200 | Cocosfettaminoxethylat | Tabelle 1 |
| 3 | Genamin T 100 | Talgfettaminoxethylat | Tabelle 2 |
| 4 | Genamin CC 500A | Cocosfettaminacetat, R = C8 (6 %), C10 (6 %), C12 (52 %), C14 (18 %), C16 (9 %), C18 (8%) | Tabelle 2 |
| 5 | Genamin 3844 | Dodecyldipropylentriamin | Tabelle 3 |
| 6 | Barquat DM 80 | Alkyldimethylbenzylammoniumchlorid, R = C12 (70 %) -C14 (30 %); enthält 10 % Ethanol, bezogen auf Handelsware | Tabelle 3 Tabelle 4 |
| 7 | Genagen CAB 818 | Alkylamidopropylbetain; 30 %ig in wässriger Lösung | Tabelle 5 |
| 8 | Genaminox LA | Alkyldimethylaminoxid, C10 (<1,5 %), C12 (69 %), C14 (25 %), C16 (4 %), C18 (<1,5 %); 30 %ig in wässriger Lösung | Tabelle 5 |
| 9 | Ethanol | | Tabelle 3 |

Die Zusätze 1-8 werden von der Fa. Clariant hergestellt.

Ergebnis: (S. Tabelle 1 bis 5)
- PVA-Lösungen mit einem Zusatz von 10 Gew.% Genamin CC500A blieben 44 Tage ohne Vergelung.
- PVA-Lösungen mit einem Zusatz von 10 Gew. % bzw. und 15 Gew. % Genaminox LA blieb bei blieben über 59 Tage bzw. 67 Tage frei von Gel.
- PVA-Lösungen mit einem Zusatz 10 Gew. % Barquat DM 80 waren bis 44 Tage nach Lösungsansatz frei von Gel. Bei 15 % Zusatz blieb die Lösung bis 99 Tage gelfrei.

Vor dem Erreichen des Gelzustandes war jeweils ein Viskositätsanstieg zu verzeichnen. PVA-Lösungen mit den anderen Zusätzen waren in wenigen Tagen hochviskos bzw. geliert.

### Vergleichsbeispiel 3

Es wurde eine Stammlösung von Mowiol 4-98 mit 24,0 % Feststoffgehalt angesetzt. Zu dieser wurden jeweils 0 %, 2 %, 5 %, 10 % sowie 15 % von Lithiumchlorid, fest auf fest, hinzugefügt.

Über Lithiumchlorid ist aus der Literatur bekannt, Wasserstoffbrückenbindungen eingehende, funktionelle Gruppen zu solvatisieren und dadurch diese an der Ausbildung dieser Bindungen zu hindern.

Resultat: Alle Lösungen stiegen bereits am 1. Tag nach Ansatz der Lösungen in ihrer Viskosität erheblich und gelierten am 3. Tag.

### Vergleichsbeispiel 4

Es wurden 17 %ige wässrige Lösungen der folgenden Mischungen angesetzt. Die Zahlen stellen Gewichtsteile trocken dar.

| **Produkte** | **Versuch 1** | **Versuch 2** | **Versuch 3** | **Versuch 4** |
|---|---|---|---|---|
| Mowiol 6-98 | 100 | | 95 | 90 |
| Mowiol 5-88 | | 100 | 5 | 10 |
| Calciumglyoxylat | | | 4 | 4 |

Es sollte getestet werden, ob ein Anteil Calciumglyoxylat, kombiniert mit einem teilverseiften PVA (Mowiol 5-88) mit Hydrolysegrad ca. 88 Mol %, den Viskositätsanstieg von gelagerten Lösungen aufhalten kann.

| **Brookfield- Viskositäts- messungen bei 23°C, 100 UPM** | **Mowiol 6-98 ohne Zusatz** | **Mowiol 5-88 ohne Zusatz** | **95 Mowiol 6-98 5 Mowiol 5-88 4 Ca-Glyoxylat** | **90 Mowiol 6-98 10 Mowiol 5-88 4 Ca-Glyoxylat** |
|---|---|---|---|---|
| | **(mPa.s)** | **(mPa.s)** | **(mPa.s)** | **(mPa.s)** |
| Sofort | 460 | 366 | 397 | 392 |
| nach 2 Stunden | 501 | 390 | 436 | 428 |
| nach 24 Stunden | 668 | 383 | 549 | 533 |
| nach 2 Tagen | 775 | 384 | 623 | 591 |
| nach 3 Tagen | 875 | 385 | 688 | 644 |

Ergebnis: Durch das Einmischen geringer Anteile Mowiol 5-88 und Calciumgyoxylat in eine Mowiol 6-98 Lösung lässt sich zwar die Viskosität gegenüber einer reinen Mowiol 6-98 Lösung erniedrigen, jedoch wird eine Viskositätsstabilität nicht erreicht.

### Vergleichsbeispiel 5

Es wurde 17 %ige wässrige Lösungen der folgenden Mischungen angesetzt. Die Zahlen stellen Gewichtsteile trocken dar:

| **Inhaltsstoffe/ Versuch** | **1** | **2** | **3** | **4** | **5** | **6** | **7** | **8** | **9** | **10** | **11** | **12** | **13** |
|---|---|---|---|---|---|---|---|---|---|---|---|---|---|
| | | | | | | | | | | | | | |
| Mowiol 6-98 | 100 | 100 | 100 | 100 | 100 | 100 | 100 | 100 | 100 | 100 | 100 | 100 | 100 |
| Calciumformiat | | 1 2 | | 4 | | | | | | | | | |
| Calciumacetat | | | | | 1 | 2 | 4 | | | | | | |
| Calcium- glyoxylat | | | | | | | | 1 | 2 | 4 | | | |
| Calcium- glycolat | | | | | | | | | | | 1 | 2 | 4 |

Es sollte geprüft werden, ob Calciumsalze von aliphatischen Säuren auf die Stabilität von Mowiol 6-98 Lösungen Einfluss nehmen.

### Ergebnisse:

Gemäß Tabelle 6 wird mit keinem der Zusätze eine ausreichende Viskositätsstabilität erreicht.

### Vergleichsbeispiel 6

Es wurde 20 %ige wässrige Lösungen der folgenden Mischungen angesetzt. Die Zahlen stellen Gewichtsteile trocken dar:

| **Produkte / Versuch** | **1** | **2** | **3** | **4** | **5** |
|---|---|---|---|---|---|
| Mowiol 6-98 | 100 | 100 | 100 | 100 | 100 |
| PEG 4000 | | 2 | 5 | 10 | 15 |

Ergebnis: Alle Muster waren nach 24 Stunden gelartig und nach 48 Stunden ausgeliert.

### Beispiel 7

Es wurden 24 %ige wässrige Lösungen der folgenden Mischungen angesetzt. Die Zahlen stellen Gewichtsteile trocken dar:

| **Produkte / Versuch** | **1** | **2** | **3** | **4** | **5** |
|---|---|---|---|---|---|
| Mowiol 4-98 | 100 | 100 | 100 | 100 | 100 |
| Barquat DM 80 | | 5 | 5 | | |
| Cartafix VXU | | | | 5 | 5 |
| Harnstoff | | | 15 | | 15 |

Barquat DM 80 ist als Zugabe 6 aus Beispiel 2 bekannt. Cartafix ist eine polycyclische Ammoniumverbindung mit Tetrahydropyrrolsubstrukturen, auch Poly-DADMAC genannt. Es sollte geprüft werden, ob neben Barquat DM 80 auch eine andere quarternäre Ammoniumverbindung einen positiven Effekt auf die Stabilität von wässrigen PVA-Lösungen ausüben. Daneben sollte der viskositätsmindernde Effekt von Harnstoff getestet werden. Die Lösungen hatten einen pH von 4.0.

**Ergebnis:**

| **Brookfield- Viskositäts- messungen bei 23°C, 100 UPM** | **Versuch 1** | **Versuch 2** | **Versuch 3** | **Versuch 4** | **Versuch 5** |
|---|---|---|---|---|---|
| sofort | 1304 | 1012 | 516 | 1452 | 784 |
| nach 3 Tag | 5320 *) | 3430 *) | 792 | 6130 *) | 1408 |
| nach 4 Tagen | 5410 *) | 3230 *) | 816 | 6670 *) | 1520 |
| nach 6 Tagen | 5280 *) | 4330 *) | 847 | Gel | 2856 |
| nach 10 Tagen | Gel | 4480 *) | 928 | | 3488 |
| nach 14 Tagen | | Gel | 978 | | 2890 |
| nach 17 Tagen | | | 1240 | | Gel |
| nach 24 Tagen | | | 1760 | | |
| nach 31 Tagen | | | 2040 | | |
| nach 39 Tagen | | | 2156 | | |
| nach 45 Tagen | | | 1990 | | |
| nach 66 Tagen | | | 1997 *) | | |

| | | | | | |
|---|---|---|---|---|---|
| *) gelartig | | | | | |

Der alleinige Zusatz von 5 Gew. % Barquat DM-80 ist zu niedrig, da es wurden schon nach 3 Tagen Gelkörper gefunden wurden. Der zusätzliche Einsatz von 15 % Harnstoff verlängerte die Standzeit bei allmählicher Viskositätszunahme ohne Gelbildung bis auf 2 Monate. Ein Zusatz von Poly-DADMAC brachte keinen ausreichenden stabilisierenden Effekt (Gelkörper nach 3 Tagen). Mit zusätzlich 15 Gew.% Harnstoff wurde nur eine Stabilität über ca. 14 Tage erreicht.

### Beispiel 8

Es wurde eine Stammlösung von Exceval AQ-4104 mit 24,0 % Feststoffgehalt angesetzt. Zu dieser wurden jeweils 0 %, 2 %, 5 %, 10 % sowie 15 % von Barquat DM-80, fest auf fest, hinzugefügt. Ergebnis siehe Tab. 7:
- Eine Lösung von Exceval AQ-4104 ohne Zusatz gelierte nach 3 Tagen.
- Lösungen von Exceval AQ-4104 mit einem Zusatz 10 Gew. % Barquat DM 80 waren bis 67 Tage nach Lösungsansatz frei von Gel. Bei 15 % Zusatz blieb die Lösung bis 87 Tage gelfrei.

**Tabelle 1**

| Zusammensetzung | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] |
|---|---|---|---|---|---|
| 100 GT Mowiol 4-98 | sofort | 1. Tag | 2. Tag | 3. Tag | 8. Tag |
| | nicht möglich stark schaumig | 2028 | 2248 | 2750 | Gel |
| 2 GT Genamin C 050 | nicht möglich stark schaumig | 1818 | 2048 | 2448 | Gel |
| 5 GT Genamin C 050 | nicht möglich stark schaumig | 1592 | 1796 | 2136 | Gel |
| 10 GT Genamin C 050 | nicht möglich stark schaumig | 1384 | 1436 | 1540 | Gel |
| 15 GT Genamin C 050 | nicht möglich stark schaumig | 1206 | 1292 | 1296 | Gel |
| | | | | | |
| 100 GT Mowiol 4-98 | sofort | 1. Tag | 2. Tag | 3. Tag | 8. Tag |
| | nicht möglich stark schaumig | 2028 | 2248 | 2750 | Gel |
| 2 GT Genamin C 200 | nicht möglich stark schaumig | 1184 | 1718 | 2500 | Gel |
| 5 GT Genamin C 200 | nicht möglich stark schaumig | 1024 | 1670 | 2152 | Gel |
| 10 GT Genamin C 200 | nicht möglich stark schaumig | 1534 | 1728 | 1742 | Gel |
| 15 GT Genamin C200 | nicht möglich stark schaumig | 1372 | 1530 | 1502 | Gel |

**Tabelle 2**

| Zusammensetzung | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | | |
|---|---|---|---|---|---|---|---|---|---|---|
| 100 GT Mowiol 4-98 | sofort | 1. Tag 15.04.03 | 2. Tag 16.04.03 | 7. Tag 22.04.03 | 14. Tag 29.04.03 | 20. Tag 05.05.03 | 29. Tag 13.05.03 | 44. Tag 28.05.03 | | |
| | nicht möglich stark schaumig | 2204 | 2232 | 3210 | 3810 | 4840 | Gel | Gel | | |
| 2 GT Genamin T 100 | nicht möglich stark schaumig | 2006 | 1946 | 2502 leicht Gel | 2964 | 3848 | Gel | Gel | | |
| 5 GT Genamin T 100 | nicht möglich stark schaumig | 1764 | 1664 | 2188 | 2868 | 3760 | Gel | Gel | | |
| 10 GT Genamin T 100 | nicht möglich | 1464 | 1420 | 1804 | 2428 | 3136 | Gel | Gel | | |
| | stark schaumig | | | | | | | | Brookfield- ViSk. 100 UPM [mPas] | Brookfield- ViSk. 100 UPM [mPas] |
| 15 GT Genamin T 100 | nicht möglich stark schaumig | 1212 | 1172 | 1400 | 1812 | 2456 | 2530 | Gel | | |
| | | | | | | | | | | |
| 100 GT Mowiol 4-98 | sofort | 1. Tag 37726 | 2. Tag 16.04.03 | 7. Tag 22.04.03 | 14. Tag 29.04.03 | 20. Tag 05.05.03 | 29. Tag 13.05.03 | 44. Tag 28.05.03 | 59. Tag 12.06.03 | 59. Tag 12.06.03 |
| | nicht möglich stark schaumig | 2204 | 2232 | 3210 | 3810 | 4840 | Gel | Gel | Gel | Gel |
| 2 GT Genamin CC500A | nicht möglich stark schaumig | 1638 | 1608 | 2088 | 2148 | 3168 | 4510 | Gel | Gel | Gel |
| 5 GT Genamin CC 500A | nicht möglich stark schaumig | 1540 | 1510 | 1812 | 1812 | 2088 | 2980 | Gel | Gel | Gel |
| 10 GT Genamin CC 500A | nicht möglich stark schaumig | 1304 | 1204 | 1484 | 1468 | 1608 | 1816 | 2270 | 2160 leichtes Gel | Gel |
| 15 GT Genamin CC500A | nicht möglich stark schaumig | 890 | 920 | 1044 | 1080 | 1260 | 1360 | 1436 | 1340 | Gel |

**Tabelle 3**

| Zusammensetzung | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] |
|---|---|---|---|---|---|---|---|
| 100 GT Mowiol 4-98 | sofort | 1. Tag | 2. Tag | 7. Tag | 14. Tag | 20. Tag | 29. Tag |
| | nicht möglich stark schaumig | 2204 | 2232 | 3210 | 3810 | 4840 | Gel |
| 2 GT Genamin 3844 | nicht möglich stark schaumig | 3916 | 4680 | Gel | Gel | Gel | Gel |
| 5 GT Genamin 3844 | nicht möglich stark schaumig | 4100 | 5380 | Gel | Gel | Gel | Gel |
| 10 GT Genamin 3844 | nicht möglich stark schaumig | 4090 | 6010 | Gel | Gel | Gel | Gel |
| 15 GT Genamin 3844 | nicht möglich stark schaumig | 4080 | 6400 | Gel | Gel | Gel | Gel |
| | | | | | | | |
| 100 GT Mowiol 4-98 | sofort | 1. Tag | 2. Tag | 7. Tag | 14. Tag | 20. Tag | 29. Tag |
| | nicht möglich stark schaumig | 2204 | 2232 | 3210 | 3810 | 4840 | Gel |
| 2 GT Barquat DM 80 | nicht möglich stark schaumig | 2408 | 2408 | 3280 | 4550 | Gel | Gel |
| 5 GT Barquat DM 80 | nicht möglich stark schaumig | 2120 | 2064 | 2872 | 3560 | 4320 | Gel |
| 10 GT Barquat DM 80 | nicht möglich stark schaumig | 1628 | 1580 | 1932 | 1972 | 2408 | 3272 |
| 15 GT Barquat DM 80 | nicht möglich stark schaumig | 1220 | 1154 | 1340 | 1232 | 1360 | 1404 |
| 3,5 GT Ethanol | 1370 schaumig | 1938 | Gel | | | | |

**Tabelle 4**

| Zusammensetzung | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] |
|---|---|---|---|---|---|---|---|
| | | | | | | | |
| 100 GT Mowiol 4-98 | 44. Tag | 59. Tag | 67. Tag | 79. Tag | 88. Tag | 99. Tag | 160. Tag |
| | Gel | | | | | | |
| 2 GT Barquat DM 80 | Gel | | | | | | |
| 5 GT Barquat DM 80 | Gel | | | | | | |
| 10 GT Barquat DM 80 | 3750 | Gel | | | | | |
| 15 GT Barquat DM 80 | 1414 | 1080 | 1204 | 1180 | 1344 | 1216 | Gel |

**Tabelle 5**

| Zusammensetzung | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | Brookfield-Visk. 100 UPM [mPas] | | | |
|---|---|---|---|---|---|---|---|---|---|---|---|
| 100 GT Mowiol 4-98 | sofort | 1. Tag | 2. Tag | 7. Tag | 14. Tag | 20. Tag | 29. Tag | 44. Tag | | | |
| | nicht möglich zu schaumig | 2388 | 2292 | 3124 | 3430 | 4100 | Gel | Gel | | | |
| 2 GT Genagen CAB 818 | nicht möglich zu schaumig | 2092 | 1994 | 2460 | 2712 | 3536 | Gel | Gel | | | |
| 5 GT Genagen CAB 818 | nicht möglich zu schaumig | 1968 | 1866 | 2312 | 2620 | 3220 | Gel | Gel | | | |
| 10 GT Genagen CAB 818 | nicht möglich | 1610 | 1524 | 2312 | 1900 | 2344 | 2960 | Gel | | | |
| | zu schaumig | | | | | | leicht gelig | | Brookfield-Visk. 100 UPM [mPas] | Brookfield-Visk. 101 UPM [mPas] | Brookfield-Visk. 102 UPM [mPas] |
| 15 GT Genagen CAB 818 | nicht möglich zu schaumig | 1230 | 1198 | 1460 | 1436 | 1622 | 2160 | Gel | | | |
| | | | | | | | | | | | |
| 100 GT Mowiol 4-98 | sofort | 1. Tag | 2. Tag | 7. Tag | 14. Tag | 20. Tag | 29. Tag | 44. Tag | 59. Tag | 67. Tag | 79. Tag |
| | nicht möglich zu schaumig | 2388 | 2292 | 3124 | 3430 | 4100 | Gel | Gel | | | |
| 2 GT Genaminox LA | nicht möglich zu schaumig | 2020 | 1956 | 2430 | 2660 | 3360 | 4250 | Gel | | | |
| 5 GT Genaminox LA | nicht möglich zu schaumig | 1782 | 1718 | 2064 | 2204 | 2732 | 3340 | 3630 | Gel | | |
| 10 GT Genaminox LA | nicht möglich zu schaumig | 1392 | 1312 | 1574 | 1528 | 1708 | 2032 | 2660 | 2152 | Gel | |
| 15 GT Genaminox LA | nicht möglich zu schaumig | 1114 | 1080 | 1278 | 1248 | 1370 | 1468 | 1728 | 1324 | 1700 | Gel |

**Tabelle 6**

| Zusammensetzung | Brookfield-Visk. 100 UPM [mPa.s] | Brookfield-Visk. 100 UPM 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] |
|---|---|---|---|---|---|---|---|---|---|---|
| | | | | | | | | | | |
| 100 GT Mowiol 6-98 | sofort | nach 2 h | nach 1 Tag | nach 2 Tagen | nach 3 Tagen | nach 6 Tagen | nach 7 Tagen | nach 8 Tagen | nach 9 Tagen | nach 10 Tagen |
| ohne Zusatz | 601 | 625 | 733 | 795 | 847 | 987 | 1009 | 1038 | 1090 | 1098 |
| 1 GT Calciumformiat | 591 | 605 | 696 | 769 | 812 | 965 | 964 | 1010 | 1060 | 1084 |
| 2 GT Calciumformiat | 558 | 595 | 678 | 740 | 790 | 951 | 955 | 1000 | 1092 | 1056 |
| 4 GT Calciumformiat | 508 | 553 | 644 | 706 | 751 | 897 | 911 | 968 | 1118 | 1064 |
| 1 GT Calciumacetat | 602 | 619 | 713 | 788 | 829 | 986 | 1000 | 1038 | 1106 | 1120 |
| 2 GT Calciumacetat | 579 | 607 | 700 | 776 | 825 | 976 | 994 | 1054 | 1136 | 1100 |
| 4 GT Calciumacetat | 560 | 570 | 652 | 722 | 763 | 904 | 925 | 948 | 1016 | 1040 |
| 1 GT Calciumglyoxylat | 634 | 647 | 750 | 793 | 855 | 1042 | 1042 | 1066 | 1092 | 1114 |
| 2 GT Calciumglyoxylat | 606 | 617 | 717 | 771 | 809 | 962 | 976 | 1002 | 1030 | 1058 |
| 4 GT Calciumglyoxylat | 567 | 580 | 660 | 721 | 756 | 877 | 896 | 910 | 948 | 966 |
| 1 GT Calciumglycolat | 627 | 647 | 717 | 789 | 841 | 1010 | 986 | 1028 | 1058 | 1096 |
| 2 GT Calciumglycolat | 618 | 628 | 714 | 778 | 824 | 1196 | 1001 | 1034 | 1066 | 1100 |
| 4 GT Calciumglycolat | 587 | 592 | 682 | 749 | 784 | 1148 | 970 | 992 | 1026 | 1054 |

**Tabelle 7**

| Zusammensetzung | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] | Brookfield-Visk. 100 UPM [mPa.s] |
|---|---|---|---|---|---|---|---|---|---|
| | | | | | | | | | |
| 100 GT Exceval AQ-4104 | sofort | 1. Tag | 2. Tag | 3. Tag | 7. Tag | 14. Tag | 21. Tag | 29. Tag | 40. Tag |
| ohne Zusatz | 1903 | 3112 | 4644 | Gel | | | | | |
| 2 GT Barquat DM 80 | 2122 | 2209 | 2878 | 3490 | 4198 | Gel | | | |
| 5 GT Barquat DM 80 | 1687 | 1684 | 1934 | 2302 | 2745 | 3652 | 4522 | Gel | |
| 10 GT Barquat DM 80 | 1301 | 1333 | 1399 | 1522 | 1964 | 2378 | 2612 | 2987 | 3359 |
| 15 GT Barquat DM 80 | 988 | 990 | 999 | 1101 | 1222 | 1345 | 1344 | 1632 | 2234 |
| | | | | | | | | | |
| 100 GT Exceval AQ-4104 | 58. Tag | 67. Tag | 78. Tag | 87. Tag | | | | | |
| ohne Zusatz | | | | | | | | | |
| 2 GT Barquat DM 80 | | | | | | | | | |
| 5 GT Barquat DM 80 | | | | | | | | | |
| 10 GT Barquat DM 80 | 4441 | Gel | | | | | | | |
| 15 GT Barquat DM 80 | 2865 | 3524 | 4489 | Gel | | | | | |

## Patentansprüche

1. Wässrige Lösung enthaltend mindestens 14 Gew.% Polyvinylalkohol und/oder Ethylen/Vinylacetat/Vinylalkohol-Copolymer und 1 bis 50 Gew. % einer oder mehrerer quartärer Ammoniumverbindungen der Formel I oder II 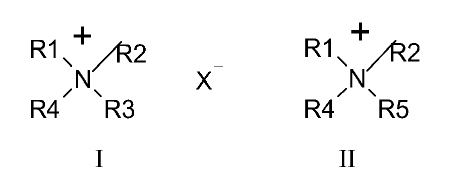 Mit R¹, R², R³, R⁴ = jeweils gleich oder unterschiedlich aliphatischer, aromatischer, substituierter oder unsubstituierter Kohlenwasserstoffrest mit 1 bis 16 Kohlenstoffatomen oder (CH₂CH₂O)ₙH und/oder (CHCH₃CH₂O)ₙH -Einheiten mit n=1 bis 10 oder olefinische Kohlenwasserstoffe mit 1 bis 16 Kohlenstoffatomen.
R⁵: O⁻, (CH₂)ₘCO₂ mit m = 1-16
X = F⁻, Cl⁻, Br⁻, Formiat, Acetat

2. Wässrige Lösung nach Anspruch 1, **dadurch gekennzeichnet, dass** der Polyvinylalkohol einen Hydrolysegrad von über 90 Mol% aufweist.

3. Wässrige Lösung nach Anspruch 1 oder 2, **dadurch gekennzeichnet, dass** die Lösung zusätzlich 1 bis 20 Gew. % Harnstoff enthält.

4. Wässrige Lösung nach einem der Ansprüche 1 bis 3, **dadurch gekennzeichnet, dass** die Lösung zusätzlich 1 bis 20 Gew. % eines Alkohols aus der Gruppe Methanol, Ethanol, n-Propanol, i-Propanol, Butanol, sek. Butanol, tert. Butanol, enthält.

5. Wässrige Lösung nach einem der Ansprüche 1 bis 4, **dadurch gekennzeichnet, dass** als quartäre Ammoniumverbindungen Alkylbenzylammoniumsalze eingesetzt werden.

6. Wässrige Lösung nach einem der Ansprüche 1 bis 4, **dadurch gekennzeichnet, dass** die Lösungen 2 bis 10 Gew.% Alkyldimethylbenzylammoniumchlorid und 5 bis 20 Gew.% Harnstoff enthalten.

7. Verwendung von quartäreren Ammoniumverbindungen der Formeln I oder II 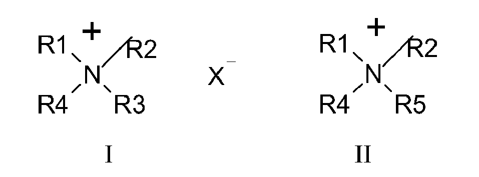 Mit R¹, R², R³, R⁴ = jeweils gleich oder unterschiedlich aliphatischer, aromatischer, substituierter oder unsubstituierter Kohlenwasserstoffrest mit 1 bis 16 Kohlenstoffatomen oder (CH₂CH₂O)ₙH und/oder (CHCH₃CH₂O)ₙH -Einheiten mit n=1 bis 10 oder olefinische Kohlenwasserstoffe mit 1 bis 16 Kohlenstoffatomen.
R⁵: O⁻, (CH₂)ₘCO₂⁻ mit m = 1-16
X = F⁻, Cl⁻, Br⁻, Formiat, Acetat
zur Reduzierung der Gelbildung wässriger Lösungen enthaltend mindestens 20 Gew.% Polyvinylalkohol und/oder Ethylen/Vinylacetat/Vinylalkohol-Copolymer, wobei die wässrigen Lösungen 1 bis 50 Gew. % einer oder mehrerer quartärer Ammoniumverbindungen der Formeln I oder II enthalten.
